(19) Europäisches Patentamt
European Patent Office
Office européen des brevets

(11) **EP 4 737 036 A1**

(12) **EUROPEAN PATENT APPLICATION**
published in accordance with Art. 153(4) EPC

(43) Date of publication:
**06.05.2026 Bulletin 2026/19**

(21) Application number: **24931595.3**

(22) Date of filing: **28.03.2024**

(51) International Patent Classification (IPC):
**B22F 10/366** (2021.01)      **B22F 10/28** (2021.01)
**B22F 12/90** (2021.01)      **B33Y 10/00** (2015.01)

(52) Cooperative Patent Classification (CPC):
**B22F 10/28; B22F 10/366; B22F 12/90;
B33Y 10/00;** Y02P 10/25

(86) International application number:
**PCT/JP2024/012716**

(87) International publication number:
**WO 2025/203451 (02.10.2025 Gazette 2025/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **JEOL Ltd.
Akishima-shi, Tokyo 196-8558 (JP)**

(72) Inventors:
• **KITAMURA Shinichi
Akishima-shi, Tokyo 196-8558 (JP)**
• **TSUTAGAWA Nari
Akishima-shi, Tokyo 196-8558 (JP)**
• **AOYAGI Kenta
Sendai-shi, Miyagi 980-8577 (JP)**

(74) Representative: **Boult Wade Tennant LLP
Salisbury Square House
8 Salisbury Square
London EC4Y 8AP (GB)**

(54) **THREE-DIMENSIONAL ADDITIVE MANUFACTURING SYSTEM, CONTROL METHOD THEREFOR, AND CONTROL PROGRAM THEREFOR**

(57)      This invention provides a three-dimensional additive manufacturing system that performs, in three-dimensional additive manufacturing, additive manufacturing using a forming beam in a vacuum to perform forming control according to a molten state of a formed surface, including a thermoelectron detector that detects an amount of thermoelectrons radiated from the formed surface irradiated with the forming beam, and a controller that controls an operation of the forming beam in accordance with the amount of thermoelectrons, a control method thereof, and a control program.

FIG. 1

**Description**

TECHNICAL FIELD

The present invention relates to a three-dimensional additive manufacturing system, a control method thereof, and a control program.

BACKGROUND ART

In the above technical field, patent literature 1 discloses a technique in which an antideposition cover configured to prevent a metal vapor generated from a molten portion at the time of forming or a metal sputter caused by fireworks from being vapor-deposited on the inner wall of a vacuum container captures thermoelectrons emitted from a formed surface, and the thermoelectrons are detected as a current by a voltage superimposed current amplifier, thereby calculating a formed surface temperature.

CITATION LIST

PATENT LITERATURE

Patent literature 1: Japanese Patent Laid-Open No. 2022-050034

SUMMARY OF THE INVENTION

TECHNICAL PROBLEM

However, in the technique described in the above literature, it is impossible to perform forming control according to the molten state of the whole formed surface.
The present invention enables to provide a technique of solving the above-described problem.

SOLUTION TO PROBLEM

One example aspect of the present invention provides a three-dimensional additive manufacturing system that performs additive manufacturing using an electron beam or laser for forming in a vacuum, comprising:

a thermoelectron detector that detects an amount of thermoelectrons radiated from a formed surface irradiated with the electron beam or laser; and
a controller that controls an operation of the electron beam or laser in accordance with the amount of thermoelectrons.

Another example aspect of the present invention provides a control method of a three-dimensional additive manufacturing system that performs additive manufacturing using a forming beam in a vacuum, comprising:

detecting an amount of thermoelectrons radiated from a formed surface irradiated with the forming beam; and
controlling an operation of the forming beam in accordance with the amount of thermoelectrons.

Still other example aspect of the present invention provides a control program of a three-dimensional additive manufacturing system that performs additive manufacturing using a forming beam in a vacuum, for causing a computer to execute a method, comprising:

detecting an amount of thermoelectrons radiated from a formed surface irradiated with the forming beam; and
controlling an operation of the forming beam in accordance with the amount of thermoelectrons.

ADVANTAGEOUS EFFECTS OF INVENTION

According to the present invention, it is possible to perform forming control according to the molten state of a whole formed surface.

BRIEF DESCRIPTION OF DRAWINGS

Fig. 1 is a block diagram showing the configuration of a three-dimensional additive manufacturing system according to the first example embodiment;

Fig. 2 is a block diagram showing the configuration of a three-dimensional additive manufacturing system according to the second example embodiment;

Fig. 3 is a graph showing the relationship between a melting temperature and a thermoelectron amount at an irradiation position according to the second example embodiment;

Fig. 4 is a flowchart showing the processing procedure of the three-dimensional additive manufacturing system according to the second example embodiment;

Fig. 5 is a view showing the configuration of a conversion table according to the second example embodiment;

Fig. 6 is a view for explaining the outline of a three-dimensional additive manufacturing system according to the third example embodiment;

Fig. 7 is a block diagram showing the configuration of a three-dimensional additive manufacturing apparatus according to the third example embodiment;

Fig. 8 is a block diagram showing the configuration of a three-dimensional additive manufacturing apparatus according to the fourth example embodiment; and

Fig. 9 is a block diagram showing the configuration of a three-dimensional additive manufacturing apparatus according to the fifth example embodiment.

DESCRIPTION OF EXAMPLE EMBODIMENTS

Example embodiments of the present invention will now be described in detail with reference to the drawings. It should be noted that the relative arrangement of the components, the numerical expressions and numerical values set forth in these example embodiments do not limit the scope of the present invention unless it is specifically stated otherwise.

[First Example Embodiment]

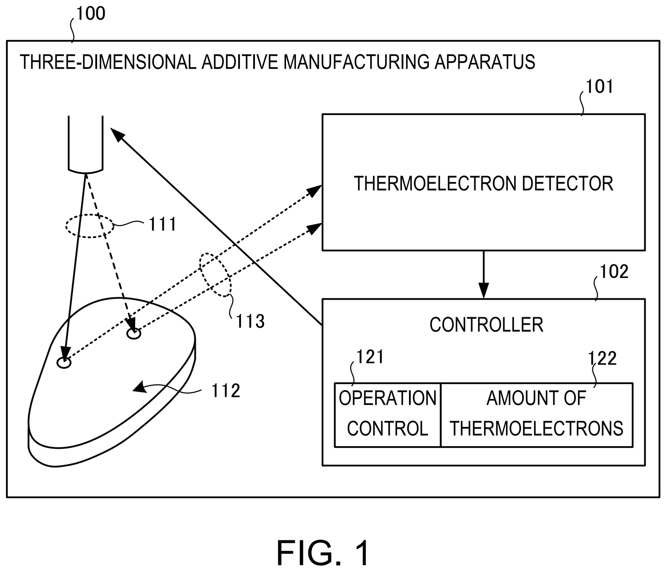

A three-dimensional additive manufacturing system 100 according to the first example embodiment of the present invention will be described with reference to Fig. 1. The three-dimensional additive manufacturing system 100 is a system that performs additive manufacturing using a forming beam in a vacuum.

As shown in Fig. 1, the three-dimensional additive manufacturing system 100 includes a thermoelectron detector 101 and a controller 102. The thermoelectron detector 101 detects the amount of thermoelectrons 113 emitted from a formed surface 112 when the formed surface 112 is irradiated with a forming beam 111 (an electron beam or laser).

The controller 102 controls the operation of the forming beam 111 in accordance with the amount of thermoelectrons 113.

According to this example embodiment, it is possible to perform forming control according to the molten state of the formed surface.

[Second Example Embodiment]

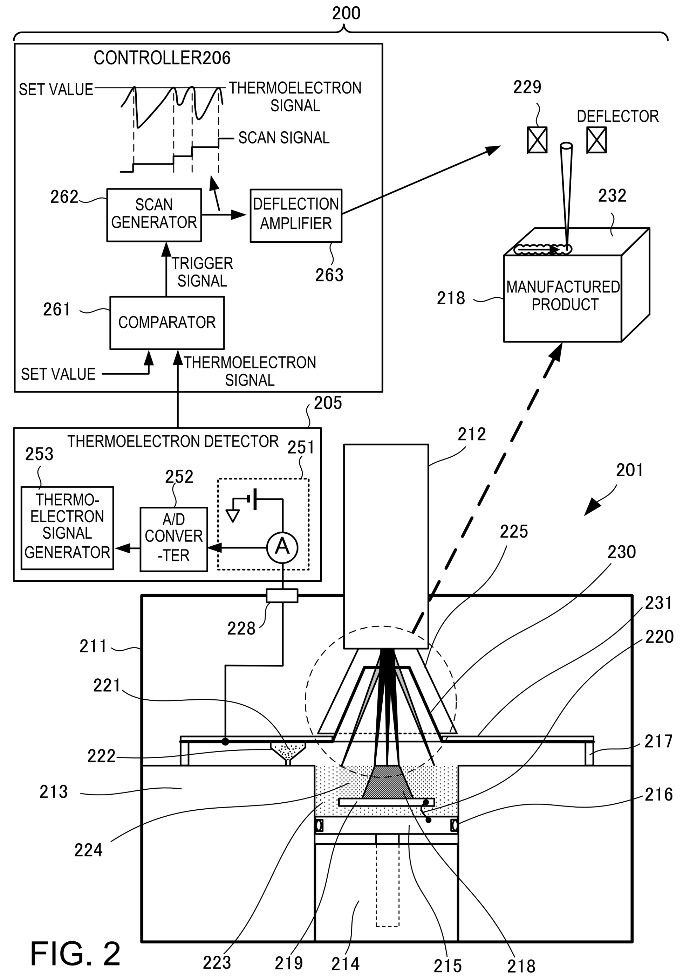

A three-dimensional additive manufacturing system 200 according to the second example embodiment of the present invention will be described next with reference to Fig. 2 and the like. The three-dimensional additive manufacturing system 200 according to this example embodiment detects the amount of thermoelectrons emitted from a formed surface irradiated with a forming beam. The detection of thermoelectrons is performed by detecting a current output from a positively charged metal plate. The metal plate according to this example embodiment is supported on a forming table by an insulating member and arranged at a position close to the formed surface, and the connecting portion between the metal plate and the current detector is arranged at a position apart from the formed surface.

<Configuration and Operation of Three-Dimensional Additive Manufacturing System>

Fig. 2 is a block diagram showing the configuration of the three-dimensional additive manufacturing system 200 according to this example embodiment. The three-dimensional additive manufacturing system 200 includes an additive manufacturing apparatus 201, a thermoelectron detector 205, and a controller 206.

(Configuration of Additive Manufacturing Apparatus)

In the additive manufacturing apparatus 201, an electron gun 212 is attached to a vacuum container 211. In the vacuum container 211, a forming frame (forming box) 213 having a circular or rectangular cross section is provided. A Z-driving mechanism 214 exists on the inner lower side of the forming frame 213, and a powder table 215 can be moved in the Z direction (vertical direction). A heat-resistant flexible seal 216 is arranged in the gap between the forming frame 213 and the powder table 215 to ensure slidability and sealability between the flexible seal 216 and the inner surface of the forming frame 213. The vacuum container 211 is exhausted by a vacuum pump (not shown) and maintained in a vacuum state.

Unsintered metal powder 223 is laid on the powder table 215, and a forming plate 219 is arranged to form a manufactured product 218 in a raised state. The forming plate 219 is grounded, by a GND line 220, to the powder table 215 having the GND potential such that it does not electrically float. The additively manufactured product 218 is formed on the forming plate 219. At the time of forming of each layer, a linear funnel 222 filled with metal powder 221 moves in the left-and-right direction in Fig. 2 to lay the metal powder 221 up to the substantially same height as the upper surface of the forming frame 213. The powder is appropriately replenished from a powder hopper (not shown) to the linear funnel 222.

The surface layer of the metal powder 223 that is laid is twodimensionally molten by an electron beam from the electron gun 212, and the layers are overlaid to build the manufactured product 218. On the forming plate 219, metal powder 224 laid in a region other than the manufactured product 218 is temporarily sintered by the electron beam from the electron gun 212, and has conductivity.

An antideposition cover 225 grounded to GND is attached between a formed surface 232 and the electron gun 212 to prevent a metal vapor generated at the time of forming or a metal sputter caused by fireworks from being vapor-deposited on the chamber inner wall. Also, the antideposition cover 225 plays the role of a radiation shield from the formed surface at a high temperature.

A thermoelectron detection electrode 230 for thermoelectron detection is provided inside the antideposition cover 225. A thermoelectron detection electrode guide 231 having the thermoelectron detection electrode 230 attached via an insulating member 217 is attached to the two ends of the forming frame 213 whose temperature rises little during forming. As the thermoelectron detection electrode 230, a metal electrode of Ti or the like in which the secondary electron emission amount of electron excitation is small is used. The insulating member 217 configured to electrically insulate the thermoelectron detection electrode 230 from the ground potential is arranged at a position apart from the formed surface 232, thereby suppressing a decrease of the insulation resistance caused by temperature rise.

A voltage superimposed current amplifier 251 is connected to the thermoelectron detection electrode guide 231 via a current introduction terminal 228. The voltage superimposed current amplifier 251 is a circuit that converts the amount of thermoelectrons drawn into the thermoelectron detection electrode 230 into a current. A low voltage of + several V or less is applied to the voltage superimposed current amplifier 251 such that there is little influence on a primary electron beam with respect to GND and only thermoelectrons having energy smaller than that of secondary electrons are attracted. Thus, thermoelectrons emitted from the molten point of the manufactured product 218 are drawn into the thermoelectron detection electrode 230 by a positive potential gradient, and the amount of electrons is detected as a current.

When a positive voltage is applied, the thermoelectron detection efficiency can be increased even in an electron beam OFF state or at the time of laser beam melting. Note that the applied voltage can be changed between a case where the temperature is relatively low and a case where the temperature is high. For example, the positive voltage is increased if the temperature is relatively low and decreased if the temperature is high. Thus, the current amplifier can be used in the whole temperature range without changing its gain. That is, thermoelectrons are detected by the electrode 230 that is a positively charged metal plate supported on the forming frame 213 via the insulating member 217 and arranged at a position close to the formed surface and the current detector 251 that detects a current output from the electrode 230. Also, the connecting portion 228 to the current detector 251 is arranged at a position apart from the formed surface 232.

Note that in the configuration shown in Fig. 2, the antideposition cover 225 hangs below the electron gun 212. However, the present invention is not limited to this, and a guide at the GND potential may be placed on the thermoelectron detection electrode guide 231 via insulating members, and the antideposition cover 225 may be placed thereon. This makes it possible to attach the thermoelectron detection electrode 230 and the antideposition cover 225 together on the formed surface.

The thermoelectron detector 205 includes the voltage superimposed current amplifier 251, an A/D converter 252, and a thermoelectron signal generator 253. The A/D converter 252 converts an analog current value that is the output of the voltage superimposed current amplifier 251 into a digital current value. The thermoelectron signal generator 253 generates a thermoelectron signal corresponding to the thermoelectron amount and sends it to the controller 206.

The controller 206 includes a comparator 261 configured to compare a thermoelectron image signal with a set value, a scan generator 262, and a deflection amplifier 263, and is connected to a deflector (deflection coil) 229 in the electron gun 212. The controller 206 controls the operation of an electron beam or laser in accordance with a calculated staying time (timing). That is, the controller 206 moves the irradiation position at a staying time (timing) that is estimated to make the amount of thermoelectrons at the irradiation position of the electron beam or laser on the formed surface have a predetermined value. Alternatively, the controller 206 moves the irradiation position at such a speed that does not make the amount of thermoelectrons at the irradiation position of the electron beam or laser on the formed surface reach a predetermined value. The beam current may be changed in place of the staying time.

(Operation)

As the sequence of forming, a "squeegeeing step" of laying powder, a "preheating step" of heating the laid powder, a "melting step" of the manufactured product area, and an "afterheating step" for preparing for next squeegeeing are executed in each layer, and these are repeated to perform forming.

At the start of the squeegeeing step, the powder table 215 is lowered by the Z-driving mechanism 214 such that the upper surface of the forming plate 219 is arranged at a position slightly lower than the upper surface of the forming frame 213. A slight descent height $\Delta Z$ corresponds to a layer thickness in the Z direction later. The linear funnel 222 filled with the metal powder 221 is moved to the opposite side (the right side in Fig. 2) along the upper surface of the forming plate 219, and the metal powder 221 corresponding to the height $\Delta Z$ is laid on the forming plate 219 and its periphery.

In the preheating step, a region slightly narrower than the forming plate 219 is irradiated with the electron beam from the electron gun 212 to heat the metal powder 221 laid on the forming plate 219, and the metal powder is temporarily sintered.

In the melting step, in accordance with a two-dimensional shape obtained by slicing a designed manufactured product prepared in advance at the interval $\Delta Z$, the two-dimensional shape region is molten by the electron beam from the electron gun 212. The electron beam is scanned in accordance with a preset scan path, and melting is performed point by point in accordance with a preset beam current, beam diameter, and scan speed (determined by the staying time at one point and the distance up to the next point). While melting is performed point by point, a thermoelectron signal from the voltage superimposed current amplifier 251 is detected.

At the start of scan, beam irradiation is performed, and the comparator 261 compares a thermoelectron signal set value and a thermoelectron signal from the thermoelectron detector 205. At the moment when the thermoelectron signal reaches the set value, a trigger signal is input to the scan generator 262, and the electron beam moves in the scan direction by a distance corresponding to a scan pitch (SP). Similarly, as for the next point, the electron beam stays at the position until the thermoelectron signal reaches the set value, and moves to the next point after reaching. In this way, movement is repeated point by point such that the thermoelectron signal reaches the set value, thereby melting the two-dimensional shape.

In the afterheating step, the formed surface 232 of the forming plate 219 covered with the powder 224 laid is arranged at the substantially same height as the upper surface of the forming frame 213, and a region slightly narrower than the whole region of the upper surface of the forming plate 219 is irradiated with the electron beam from the electron gun 212, thereby heating the forming plate 219 in advance to a temperature at which the metal powder 221 is temporarily sintered. This can suppress scattering of the metal powder 221 by charge-up.

Note that as for the three-dimensional additive manufacturing system 200, a case where the additive manufacturing apparatus 201 and the controller 206 are arranged close has been exemplified. However, the additive manufacturing apparatus 201 and the controller 206 or a part of the controller 206 may be arranged far apart and exchange information by wire or wirelessly.

<Reason Why Thermoelectron Amount at Melting Position Is Detected>

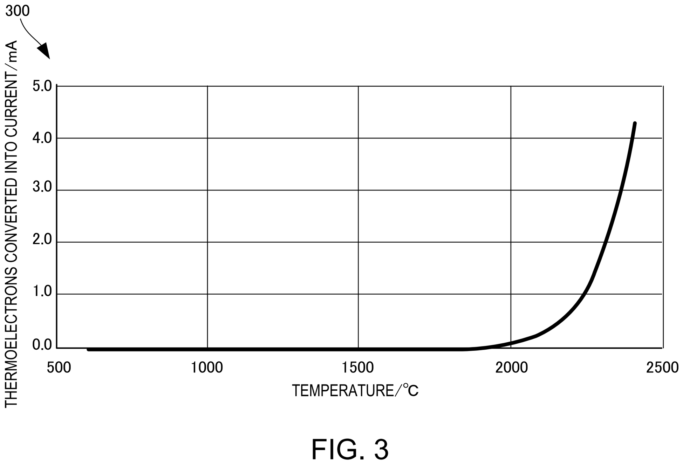

Fig. 3 is a graph showing the relationship between a melting temperature and a thermoelectron amount at an irradiation position. Fig. 3 shows the result of calculating thermoelectrons generated from a $\phi 0.5$ mm region of Ti64 alloy as the function of temperature. As is apparent from Fig. 3, the thermoelectron amount exponentially increases along with the rise of the temperature. For example, in a case of Ti64, in preheating, the formed surface is heated to about 750°C, and thermoelectrons emitted from the whole region correspond to about 0.5 pA (picoampere). On the other hand, thermo-electron emission from the $\phi 0.5$ mm region at a melting point (about 1,650°C) is about 1 $\mu$A (microampere), it is about 100 $\mu$A (microampere) at a melting temperature of about 2,000°C, and thermoelectrons of 4 mA (milliampere) or more are generated at about 2,400°C.

On the other hand, if the formed surface has a size of $110 \times 110$ mm$^2$, thermoelectrons emitted when the formed surface is heated in preheating or afterheating correspond to a current as small as 20 nA (nanoampere) even if the temperature is 1,000°C. During melting, the temperature other than that of the molten point is lower. Hence, thermoelectrons detected during melting form a thermoelectron signal reflecting the high temperature of the molten point (molten pool).

<Processing Procedure of Three-Dimensional Additive Manufacturing System>

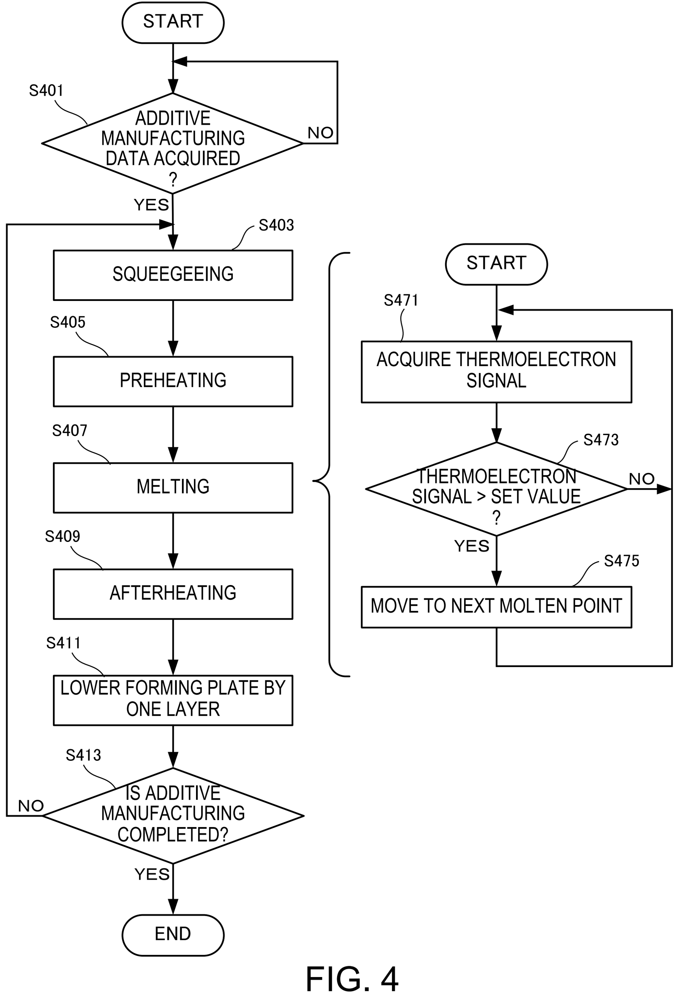

Fig. 4 is a flowchart showing the processing procedure of the three-dimensional additive manufacturing system 200. This flowchart is executed by a CPU (Central Processing Unit) provided in the controller 206 using a RAM (Random Access Memory), thereby implementing the constituent elements shown in Fig. 2 such that the three-dimensional additive manufacturing apparatus is caused to operate.

In step S401, the controller 206 waits for acquisition of additive manufacturing data. If acquisition of additive manufacturing data is ended, in step S403, the controller 206 instructs the additive manufacturing apparatus 201 to perform squeegeeing of additive manufacturing powder.

When squeegeeing is ended, in step S405, the controller 206 instructs the additive manufacturing apparatus 201 to execute preheating to heat the laid powder.

When preheating is completed, in step S407, the controller 206 instructs the additive manufacturing apparatus 201 to execute "melting" of a manufactured product area. In step S409, the controller 206 instructs the additive manufacturing apparatus 201 to perform "afterheating (AH)" for preparing for next squeegeeing. In the additive manufacturing apparatus 201, the formed surface 232 is arranged at the substantially same height as the upper surface of the forming frame 213 and irradiated with the electron beam from the electron gun 212, thereby heating the forming plate 219 to a temperature at which the metal powder 221 is temporarily sintered.

When afterheating is ended, in step S411, the controller 206 instructs the additive manufacturing apparatus 201 to lower the forming plate by one layer. In step S413, the controller 206 determines whether additive manufacturing is completed. If additive manufacturing is not completed, the process returns to step S403 to repeat forming of the next layer. In "melting" of the manufactured product area in step S407, processing of steps S471 to S477 is performed as a formed surface monitoring method according to this example embodiment.

In step S471, the controller 206 acquires a thermoelectron signal at the molten point. In step S473, the controller 206 compares the acquired thermoelectron signal and a set value. If the thermoelectron signal exceeds the set value, the process advances to step S475, and melting control is performed to move the electron beam to the next molten point. The set value is derived in advance from a conversion table for a thermoelectron signal and a temperature, and the deflector 229 is controlled such that the melting temperature is constant. Even in dot melting in which a scan path is not decided, the electron beam is moved to the next point at a timing at which the thermoelectron signal obtains a predetermined value. When thermoelectron emission during melting is thus controlled to constant, the melting temperature can be made constant, even melting can be performed in the formed surface, and defects can be suppressed.

(Conversion Table)

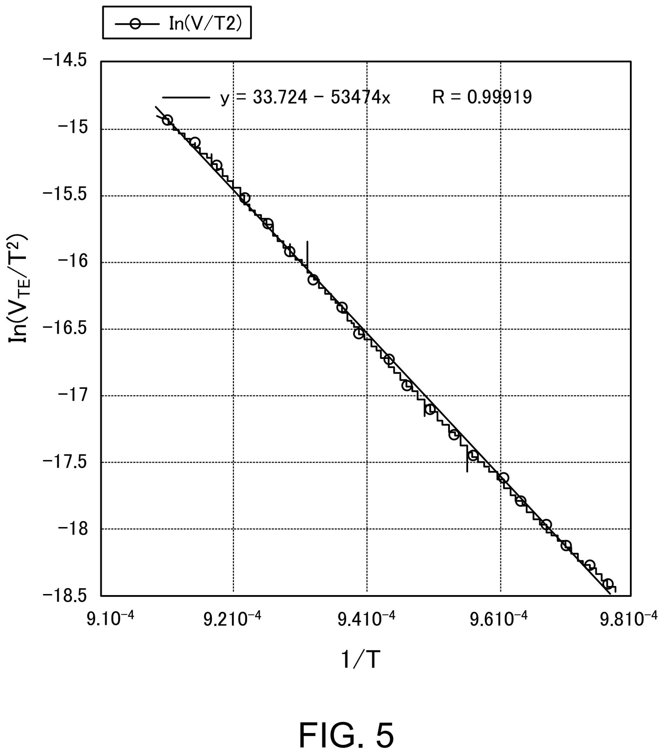

Fig. 5 is a view showing an example of a conversion table configured to calculate a set value. The conversion table is used to convert a thermoelectron amount into a melting temperature. The conversion table is generated in the following way. The relationship between a temperature T of a radiation thermometer or the like and a thermoelectron current I detected by the voltage superimposed current amplifier 251 is measured in advance, fitting of these is performed for equation (1) below, and a and b are obtained as constants.

$$I = a{\cdot}T^2{\cdot}e^{b/T} \tag{1}$$

Alternatively, in an equation developed like equation (2), the relationship between $\ln(I/T2)$ and $1/T$ may be plotted, and a and b may be obtained from the slope b and the intercept $\ln a$ of the linear expression. The linear expression at that time can be relatively easily obtained by the least squares method, or the like.

$$\ln(I/T^2) = b{\cdot}1/T + \ln a \tag{2}$$

The relationship between the thermoelectron current and the temperature is obtained using equation (1) for which a and b are obtained, and conversion to the temperature is performed.

Note that it is difficult to perform the above-described measurement because of the molten state. For this reason, a region that is large to some extent is scanned, the temperature of the region and thermoelectrons from the region are measured, the region is developed to a melting size such as a beam size, and the relationship between the temperature and thermoelectrons in a necessary spot region is obtained. Also, if the relationship between the temperature and the thermoelectrons is obtained, a melting step at a necessary melting temperature can be implemented by calculating a thermoelectron signal corresponding to a necessary temperature as a threshold in advance and using the value as a parameter.

By using the conversion table, the value of thermoelectrons at which the electron beam should be moved to the next point can be obtained from the upper limit temperature at the molten point, and the value of the thermoelectron amount can be used as a set value. Alternatively, a plurality of set values may be stored in accordance with metal powder types, and a set value may be read out in accordance with metal powder information input before forming and used.

As described above, in this example embodiment, attributes of scan (a scan pitch, a scan speed, a line pitch, and the like) are controlled in accordance with the value of the thermoelectron signal. The value of the thermoelectron signal at each molten point is made constant. The staying time of the electron beam is changed for each molten point such that the integrated value of the thermoelectron signal is constant.

It is therefore possible to easily and correctly make the melting temperature at each molten point on the formed surface constant and improve forming quality.

Note that since the speed of response of an electron beam to current control is not high, it is effective to change not the current value but the timing or scan speed. On the other hand, if a laser is used, power control (control to change the pulse width) may be performed. Also, if the scan pitch is small, variations of the melting temperature on the entire formed surface can be eliminated.

Conventionally, in control for making the staying time of an electron beam at each molten point constant or control for performing empirically obtained correction for a staying time near a fold-back point, optimum melting control cannot be performed for a manufactured product having a complex shape or for a formed surface on which the powder particle density changes between points. However, according to this example embodiment, high-quality forming cba be performed even for a manufactured product of such conditions.

[Third Example Embodiment]

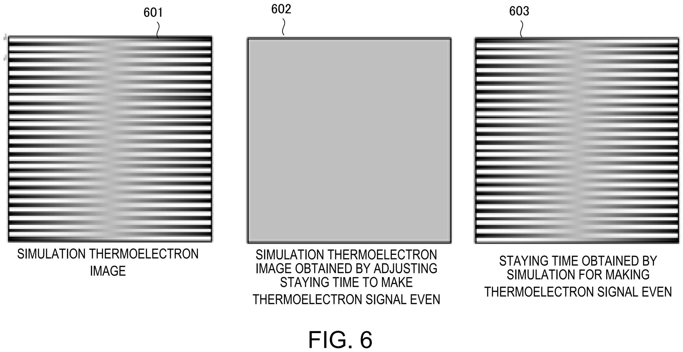

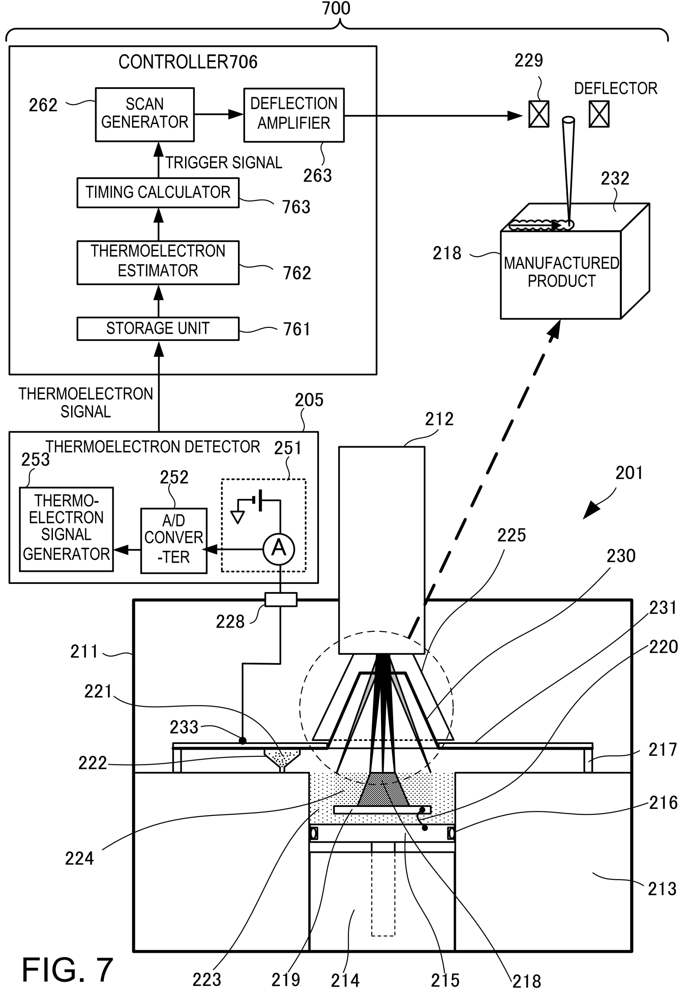

A three-dimensional additive manufacturing system according to the third example embodiment of the present invention will be described next with reference to Figs. 6 and 7. The three-dimensional additive manufacturing system according to this example embodiment is different from the second example embodiment in that not feedback control but simulation control is performed. The rest of the components and operations is the same as in the second example embodiment. Hence, the same reference numerals denote the same components and operations, and a detailed description thereof will be omitted.

When the generation amount of thermoelectrons is simulated in accordance with forming conditions, the amount exhibits good matching with a thermoelectron image. For example, a simulation image in which shading changes every other line, like an image 601 shown in Fig. 6, can be generated. Hence, the staying time of an electron beam at each point is obtained by calculation such that a thermoelectron image 602 without shading is output. Then, the staying time of the electron beam at each point on the formed surface is obtained as indicated by an image 603. In accordance with the staying time thus obtained by calculation, melting control is performed to execute forming.

That is, the thermoelectron image in the melting step is simulated, applied energy (the staying time or the beam current amount) at each point, with which the thermoelectron amount at each molten point obtains a set value (predetermined value), is obtained, a scan path for the applied energy is created, and melting control under the condition is performed.

Fig. 7 is a view showing the configuration of a three-dimensional additive manufacturing system 700 according to this example embodiment. A controller 706 of the three-dimensional additive manufacturing system 700 includes a storage unit 761, a thermoelectron estimator 762, and a timing calculator 763. The storage unit 761 stores a thermoelectron image detected by a thermoelectron detector 205 in association with forming data (scan locus data of an electron beam).

The thermoelectron estimator 762 estimates a thermoelectron image by referring to the data stored in the storage unit 761. For example, when repetitively forming identical (or similar) manufactured products, the thermoelectron image can be estimated using a thermoelectron signal detected in the past.

Using the estimated thermoelectron image, the timing calculator 763 calculates the staying time (timing). Since the timing calculator 763 outputs a trigger signal at the calculated timing, no comparator is needed, and the trigger signal is directly input to a scan generator 262.

The controller 706 controls the operation of the electron beam or laser in accordance with the calculated staying time (timing). That is, the controller 706 moves the irradiation position at a staying time (timing) that is estimated to make the amount of thermoelectrons at the irradiation position of the electron beam or laser on the formed surface have a predetermined value. Alternatively, the controller 706 moves the irradiation position at such a speed that does not make the amount of thermoelectrons at the irradiation position of the electron beam or laser on the formed surface reach a predetermined value. The beam current may be changed in place of the staying time.

Thus, control can be performed such that a predetermined melting temperature can always be obtained independently of the size or location of a melting region in the melting step. In addition, a manufactured product of stable quality can always be formed by optimizing the melting temperature.

[Fourth Example Embodiment]

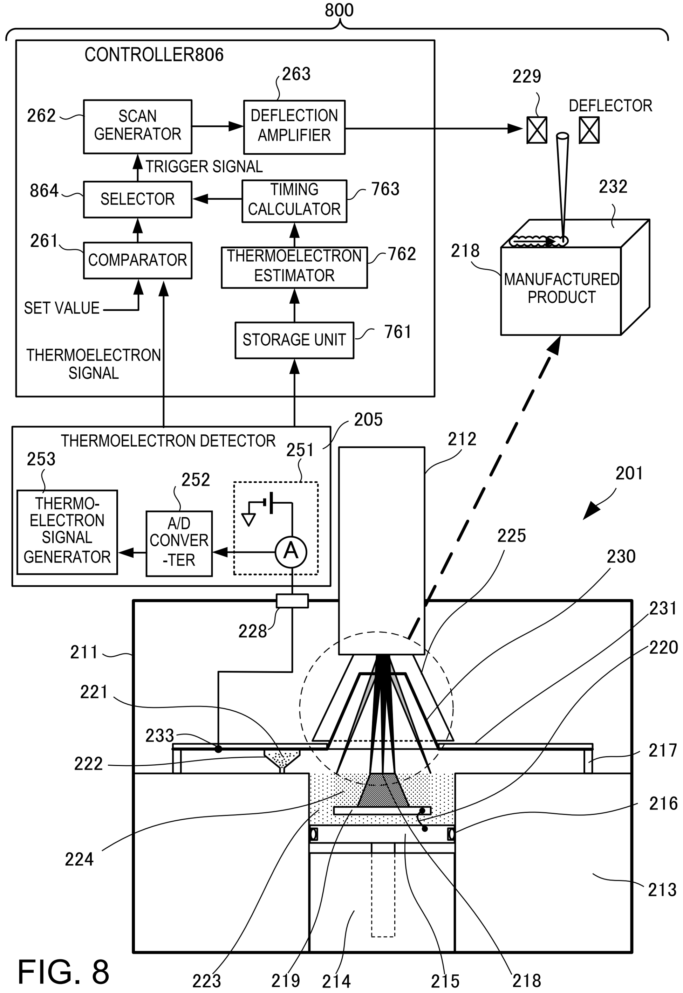

A three-dimensional additive manufacturing apparatus according to the fourth example embodiment of the present invention will be described next with reference to Fig. 8. The three-dimensional additive manufacturing apparatus according to this example embodiment is different from the second and third example embodiments in that feedback control (second example embodiment) and simulation control (third example embodiment) are combined. The rest of the components and operations is the same as in the second example embodiment. Hence, the same reference numerals denote the same components and operations, and a detailed description thereof will be omitted.

For example, this example embodiment is effective in a case where the shape is complex, and it is difficult to completely reproduce a thermoelectron signal by a simulation. For example, for the inside portion of a forming region where the thermoelectron signal estimation accuracy is high, control is performed by performing calculation in advance. For the outside portion where the estimation accuracy is considered to be low, thermoelectrons detected in real time are compared with a set value.

Fig. 8 is a view showing the configuration of a three-dimensional additive manufacturing system 800 according to this example embodiment. The three-dimensional additive manufacturing system 800 includes a timing calculator 763 and a selector 864.

The timing calculator 763 estimates, by a simulation, the amount of thermoelectrons radiated from the formed surface during forming. The selector 864 selects, for each region on the formed surface, the estimated staying time (timing) or the timing at which the detected thermoelectron signal obtains the set value in accordance with a preset criterion, and outputs it to a scan generator 262.

For example, near the center of a formed surface 232, the selector 864 selects the staying time (timing) from the timing calculator 763. Near the periphery of the formed surface 232, the selector 864 selects a timing from a comparator 261 that outputs a timing at which the actual thermoelectron signal obtains the set value. Reversely, near the periphery of the formed surface 232, the selector 864 may select the timing signal from the timing calculator 763. Near the center of the formed surface 232, the selector 864 may select the timing signal from the comparator 261. For example, the degree of complexity may be determined for each region of the formed surface, the timing signal from the comparator 261 based on the actual thermoelectron signal may be selected in a region where the degree of complexity is a predetermined value or more, and the timing signal from the timing calculator 763 may be selected in a region where the degree of complexity is smaller than the predetermined value.

According to this example embodiment, control can accurately be performed such that a predetermined melting temperature can always be obtained independently of the size or location of a melting region in the melting step. In addition, a manufactured product of stable quality can always be formed by optimizing the melting temperature.

[Fifth Example Embodiment]

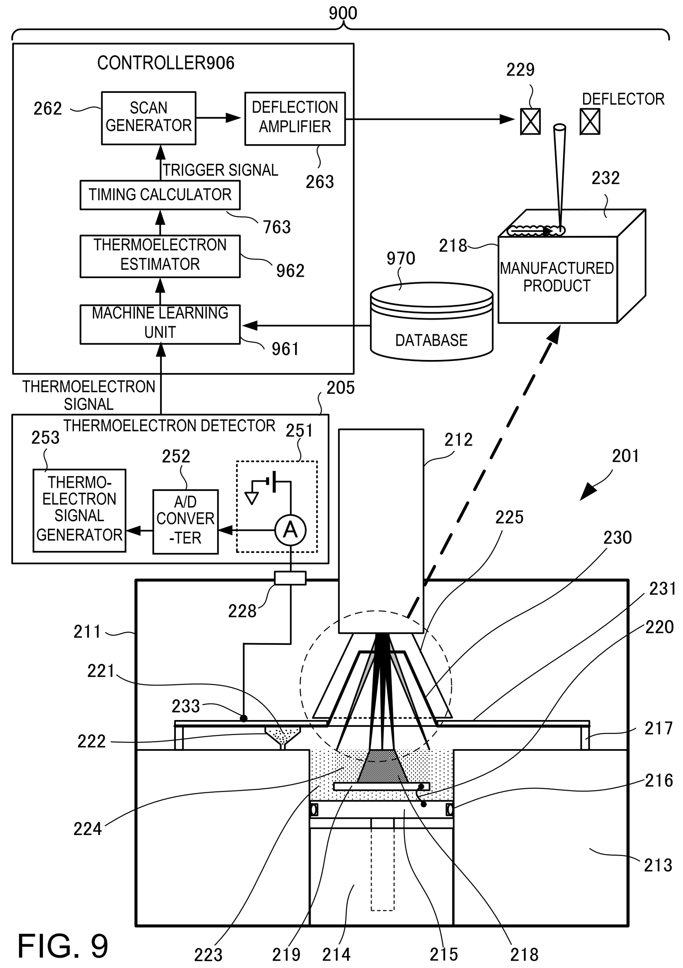

A three-dimensional additive manufacturing apparatus according to the fifth example embodiment of the present invention will be described next with reference to Fig. 9. A three-dimensional additive manufacturing apparatus 900 according to this example embodiment is different from the third example embodiment in that a thermoelectron image is estimated by artificial intelligence. The rest of the components and operations is the same as in the third example embodiment. Hence, the same reference numerals denote the same components and operations, and a detailed description thereof will be omitted.

A machine learning unit 961 performs machine learning using, as supervisory data, correspondence between forming data and a thermoelectron signal detected by a thermoelectron detector 205 or thermoelectron image data accumulated in an external database 970, thereby generating a thermoelectron image estimation model. A thermoelectron estimator 962 estimate a thermoelectron image using the generated thermoelectron image estimation model.

According to this example embodiment, control can accurately be performed such that a predetermined melting temperature can always be obtained independently of the size or location of a melting region in the melting step. In addition, a manufactured product of stable quality can always be formed by optimizing the melting temperature.

[Other Example Embodiments]

In the above-described example embodiments, electron beam type PBF has been described. Even in wire or powder type DED, melting temperature measurement by thermoelectrons can be performed during melting. Even in a laser type, thermoelectron measurement can similarly be performed in a vacuum, and melting temperature measurement during melting can be performed. In laser beam melting, thermoelectrons are detected even at the time of beam irradiation.

While the invention has been particularly shown and described with reference to example embodiments thereof, the invention is not limited to these example embodiments. It will be understood by those of ordinary skill in the art that various changes in form and details may be made therein without departing from the spirit and scope of the present invention as defined by the claims. A system or apparatus including any combination of the individual features included in the respective example embodiments may be incorporated in the scope of the present invention.

The present invention is applicable to a system including a plurality of devices or a single apparatus. The present invention is also applicable even when an information processing program for implementing the functions of example embodiments is supplied to the system or apparatus directly or from a remote site. Hence, the present invention also incorporates the program installed in a computer to implement the functions of the present invention by the computer, a medium storing the program, and a WWW (World Wide Web) server that causes a user to download the program. Especially, the present invention incorporates at least a non-transitory computer readable medium storing a program that causes a computer to execute processing steps included in the above-described example embodiments.

**Claims**

1. A three-dimensional additive manufacturing system that performs additive manufacturing using a forming beam in a vacuum, comprising:

   a thermoelectron detector that detects an amount of thermoelectrons radiated from a formed surface irradiated with the forming beam; and
   a controller that controls an operation of the forming beam in accordance with the amount of thermoelectrons.

2. The three-dimensional additive manufacturing system according to claim 1, wherein said controller moves an irradiation position at a timing at which the amount of thermoelectrons at the irradiation position of the forming beam on the formed surface reaches a predetermined value.

3. The three-dimensional additive manufacturing system according to claim 1, wherein said controller moves an irradiation position at such a speed that does not make the amount of thermoelectrons at the irradiation position of the electron beam or laser on the formed surface reach a predetermined value.

4. The three-dimensional additive manufacturing system according to claim 1, further comprising an estimator that estimates, by a simulation, the amount of thermoelectrons radiated from the formed surface during forming, wherein said controller controls the operation of the forming beam in accordance with the estimated amount of thermoelectrons.

5. The three-dimensional additive manufacturing system according to claim 1, further comprising an estimator that estimates, by a simulation, the amount of thermoelectrons radiated from the formed surface during forming, wherein said controller moves an irradiation position at a timing at which the amount of thermoelectrons at the irradiation position of the forming beam on the formed surface reaches a predetermined value while controlling the operation of the forming beam in accordance with the estimated amount of thermoelectrons.

6. The three-dimensional additive manufacturing system according to claim 1, further comprising an estimator that estimates, by a simulation, the amount of thermoelectrons radiated from the formed surface during forming, wherein said controller moves an irradiation position at such a speed that does not make the amount of thermoelectrons at the irradiation position of the forming beam on the formed surface reach a predetermined value while controlling the operation of the electron beam or laser in accordance with the estimated amount of thermoelectrons.

7. The three-dimensional additive manufacturing system according to claim 1, wherein said thermoelectron detector comprises:

   a positively charged metal plate; and
   a current detector that detects a current output from the metal plate.

8. The three-dimensional additive manufacturing system according to claim 7, wherein said metal plate is supported on a forming table by an insulating member and arranged at a position close to the formed surface, and said insulating member is arranged at a position apart from the formed surface.

9. A control method of a three-dimensional additive manufacturing system that performs additive manufacturing using a forming beam in a vacuum, comprising:

detecting an amount of thermoelectrons radiated from a formed surface irradiated with the forming beam; and controlling an operation of the forming beam in accordance with the amount of thermoelectrons.

**10.** A control program of a three-dimensional additive manufacturing system that performs additive manufacturing using a forming beam in a vacuum, for causing a computer to execute a method, comprising:

detecting an amount of thermoelectrons radiated from a formed surface irradiated with the forming beam; and controlling an operation of the forming beam in accordance with the amount of thermoelectrons.

100

THREE-DIMENSIONAL ADDITIVE MANUFACTURING APPARATUS

101

THERMOELECTRON DETECTOR

111

113

112

102

CONTROLLER

121

122

| OPERATION CONTROL | AMOUNT OF THERMOELECTRONS |
|---|---|

FIG. 1

FIG. 2

FIG. 3

FIG. 4

FIG. 5

FIG. 6

FIG. 7

FIG. 8

FIG. 9

## INTERNATIONAL SEARCH REPORT

| | International application No. |
|---|---|
| | **PCT/JP2024/012716** |

### A. CLASSIFICATION OF SUBJECT MATTER

*B22F 10/366*(2021.01)i; *B22F 10/28*(2021.01)i; *B22F 12/90*(2021.01)i; *B33Y 10/00*(2015.01)i
FI: B22F10/366; B22F10/28; B22F12/90; B33Y10/00

According to International Patent Classification (IPC) or to both national classification and IPC

### B. FIELDS SEARCHED

Minimum documentation searched (classification system followed by classification symbols)

B22F10/366; B22F10/28; B22F12/90; B33Y10/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2022-50034 A (JEOL LTD.) 30 March 2022 (2022-03-30) claims, paragraphs [0024]-[0027], [0033] | 1, 7-10 |
| Y | | 7, 8 |
| A | | 2-6 |
| X | US 2021/0138551 A1 (LAWRENCE LIVERMORE NATIONAL SECURITY, LLC.) 13 May 2021 (2021-05-13) paragraph [0028], claims | 1, 9, 10 |
| Y | | 7, 8 |
| A | | 2-6 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **06 June 2024** | **18 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| JP | 2022-50034 | A | 30 March 2022 | US paragraphs [0034]-[0037], [0044], claims EP | 2022/0080506 3970885 | A1 A2 | |
| US | 2021/0138551 | A1 | 13 May 2021 | WO | 2020/005228 | A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022050034 A